# EUROPEAN PATENT SPECIFICATION

(11) **EP 1 684 370 B1**
(45) Date of publication and mention of the grant of the patent: **19.08.2015**
(21) Application number: 04799529.5
(22) Date of filing: 01.11.2004
(51) Int. Cl.: H01M 4/02, H01M 4/58, H01M 10/0525

(54) **ELECTRODE ACTIVE MATERIAL AND USE THEREOF**
ELEKTRODE-AKTIVMATERIAL UND VERWENDUNG DAFÜR
MATIERE ACTIVE POUR ELECTRODE ET SON UTILISATION

(30) Priority: 31.10.2003 JP 2003373359; 23.03.2004 JP 2004084822
(43) Date of publication of application: 26.07.2006
(73) Proprietor: TOYOTA JIDOSHA KABUSHIKI KAISHA, Toyota-shi, Aichi-ken, 471-8571 (JP)
(72) Inventor: OKADA, Shigeto, c/o TOYOTA JIDOSHA KABUSHIKI KAISHA, Aichi-ken 471-8571 (JP); YAMAKI, Jun-ichi, c/o TOYOTA JIDOSHA KABUSHIKI KAISHA, Aichi-ken 471-8571 (JP); OKAZAKI, Yasunori, c/o TOYOTA JIDOSHA KABUSHIKI KAISHA, Aichi-ken 471-8571 (JP); TAKEBE, Hiromichi, c/o TOYOTA JIDOSHA KABUSHIKI KAISHA, Aichi-ken 471-8571 (JP)
(74) Representative: Kuhnen & Wacker
(86) International application number: PCT/JP2004/016506
(87) International publication number: WO 2005/043654

(56) References cited:
- EP-A- 0 571 858
- WO-A-2004/036672
- JP-A- 2001 085 010
- JP-A- 2001 250 555
- JP-A- 2002 117 831
- JP-A- 2003 217 584
- JP-A- 2003 242 974
- US-A1- 2003 064 287

## Description

### FIELD OF THE INVENTION

The present invention relates to an electroactive material that is suitable as a constituent material of a battery and a method of manufacturing the same. In addition, the present invention relates to a secondary battery that employs this type of electroactive material.

### BACKGROUND OF THE INVENTION

Secondary batteries are known which are charged and discharged by means of cations such as lithium ions traveling between both electrodes. A typical example of this type of secondary battery is a lithium ion secondary battery. A material that can charge/discharge lithium ions can be employed as the electroactive material of this secondary battery. Examples of an anode active material include carbonaceous materials such as graphite. Examples of a cathode active material include oxides whose constituent elements are lithium and transition metal, such as lithium nickel oxides, lithium cobalt oxides, and the like (hereinafter referred to as "lithium containing compound oxide").

Various materials are being studied as anode active materials or cathode active materials from the viewpoint of improving the functionality and capacity, and reducing the cost, of this type of secondary battery. For example, an electroactive material whose primary component is an olivine type iron phosphate complex represented by the general formula LiFePO₄ is disclosed in Japanese Patent Application Publication No. H9-134724. In addition, Japanese Patent Application Publication No. 2000-509193 is cited as conventional prior art reference related to an electroactive material composed of a Nasicon type iron phosphate complex represented by Li₃Fe₂(PO₄)₃. A conventional method of manufacturing the phosphate type electroactive material described above is found in, for example, Japanese Patent Application Publication H9-134725, in which equal amounts of lithium carbonate, iron oxalate dihydrate, and diammonium phosphate are mixed together, and then sintered for several days in a nitrogen gas flow at 800°C to synthesize LiFePO₄. In Japanese Patent Application Publication No. 2001-250555, LiFePO₄ is synthesized by a method of synthesis which includes a mixing step in which Li₃PO₄ and Fe₃(PO₄)₂ or Fe₃(PO₄)₂ • nH₂O (the hydrate thereof) are mixed together to form a precursor, and a sintering step in which the precursor obtained in the mixing step is sintered for 5 to 24 hours at 500 to 700°C. In Japanese Patent Application Publication No. 2002-15735, a lithium compound, an iron compound, and an ammonium salt containing phosphorous are mixed together, and this mixture is sintered at a temperature of 600 to 700°C to synthesize LiFePO₄. In this publication, the lithium compounds that are the source of lithium include Li₂CO₃, Li(OH) • H₂O, LiNO₃, and the like, the iron compounds that are the source of iron include FeC₂O₄ • 2H₂O, FeCl₂, and the like, in which the iron is bivalent, and the phosphorous containing ammonium salts that are the source of phosphorous include NH₄H₂PO₄, (NH₄)₂HPO₄, P₂O₅, and the like. All of the LiFePO₄ disclosed in these references is crystalline LiFePO₄. High temperatures and long reaction times are necessary in the synthesis of crystalline LiFePO₄, and iron oxides that are inexpensive and have low reactivity cannot be employed as a starting material.

Here, it would be useful if a phosphate type of electroactive material is provided which can achieve more favorable battery characteristics, or which can be more easily produced.

The US 2003/0064287 A1 shows the electrochemical performance of rechargeable lithium battery cells comprising crystalline or amorphous Fe^{III} iron phosphate active positive electrode compounds being improved by compound hydration and intimate ball-milled incorporation of electrically conductive carbon reducing the crystal particle size of the active compound to about 500 nm.

The EP 0 573 858 A1 discloses lithium secondary battery comprising a positive electrode composed of a positive electrode active material comprising at least one member selected from the group consisting of lithium phosphate, lithium cobalt phosphate, cobalt oxide, and lithium cobalt oxide, such that the molar ratio of cobalt:phosphorous:lithium is more than 0.1:morse than 0.2:1, a negative electrode, and an electrolyte. The lithium secondary battery of the invention has high energy density leading to high discharge capacity, high electromotor force, and high discharge voltage, and excellent cycle properties. A positive electrode active material is preferably amorphous, and has an average particle size of 0.01 through 20 µm and a BET specific surface area of 1 through 1.000 m²/g. The positive electrode active material may be made amorphous by sputtering, abrupt cooling of a liquefied oxide, or mechanical alloying. The amorphous state is confirmed, for example by X-ray diffraction analysis.

The EP 1 553 648 A1 discloses a method for producing a cathode material for a lithium battery, including the steps of mixing a compound which releases phosphate ions in a solution with metal iron to cause dissolution and reaction of the metal iron, and calcining the reaction mixture to synthesize ferric phosphate. A cathode material obtained by this method is ferric phosphate represented by the general formula FePO₄. The result of X-ray diffraction analysis of the synthesized cathode material calcined at a temperature between 100°C and lower than 500°C had an amorphous structure with no diffraction peaks in the X-ray diffraction analysis.

Accordingly, one object of the present invention is to provide an electroactive material whose primary component is a metal phosphate complex, and which exhibits favorable battery characteristics (e.g., charge/discharge characteristics). Another object of the present invention is to provide a method of manufacturing this type of electroactive material. Yet another object of the present invention is to provide a non-aqueous electrolyte secondary battery comprising this electroactive material. Yet another object of the present invention is to provide an electrode for use in a battery that comprises this electroactive material and a method of manufacturing the same.

### DISCLOSURE OF THE INVENTION

The present inventors discovered that an electroactive material whose primary component is a metal phosphate complex can be synthesized into an amorphous material at a much lower cost and a shorter period of time than conventional crystalline material, by rapidly cooling an inexpensive metal oxide compound from the melted state. In addition, the present inventors discovered that even with this amorphous material (e.g., the amorphous material obtained by using the aforementioned melt quench method), favorable battery characteristics that are the same as those of the crystalline material can be exhibited, and thereby completed the present invention.

According to the present invention, an electroactive material whose primary component is an substantially amorphous transition metal phosphate complex represented by the general formula AₓM(PO₄)_{y}according to claim 1 is provided. A in the aforementioned general formula is one or two or more elements selected from the alkali metals. M in the aforementioned general formula is one or two or more elements selected from the transition metal elements. Here, x is a number that satisfies 1 < x ≤ 2, and y is a number that satisfies 0 < y ≤ 2 and 75 atom% or more of M in said general formula is iron and 75 atom% or more of A in said general formula is lithium and the electroactive material contains an excessive amount of A compared to the theoretical quantity of the olivine or Nasicon crystalline composition and said substantially amorphous transition metal phosphate complex satisfies one or two or more of the following conditions:
(1) average crystal size is 1000 angstroms or less;
(2) density of the metal complex is greater than the theoretical value of the density when completely crystalline by 3% or more; and
(3) no peaks observed in an X-ray diffraction pattern that indicates a crystalline structure.

The metal complex represented by the aforementioned general formula can have a large theoretical capacity because the electrochemical equivalent is relatively small. In addition, an amorphous metal complex like that described above can provide an electroactive material that exhibits more favorable charge/discharge characteristics than those of a crystalline metal complex. According to this electroactive material, at least one of the following effects can be achieved: an improvement in the initial electric charge capacity (initial capacity), an improvement in the initial discharge electric capacity (initial reversible capacity), a reduction in the difference between the initial capacity and the initial reversible capacity (irreversible capacity), a reduction in the ratio of the irreversible capacity with respect to the initial capacity (irreversible capacity/initial capacity), and the like. Specific examples of M in the aforementioned general formula include iron (Fe), vanadium (V), and titanium (Ti). In addition, because the aforementioned metal phosphate complex is substantially amorphous, the x and/or the y in the aforementioned general formula can be a great variety of values that are not possible with a crystalline material. For example, in the aforementioned general formula, when x = y = 1 the complex is olivine type and when x = y = 1.5 the complex is Nasicon type. However, an amorphous material in which x and/or y is a value in between these values can also be obtained as a continuous solid solution.

In one preferred aspect of the electroactive material disclosed herein, preferably about 90 atom% or more of M is Fe, and even more preferably M is substantially Fe. The iron phosphate complex described above can be represented with the general formula AFePO₄ when, for example, x = y = 1 in the general formula AₓM(PO₄)_{y}.

In another preferred aspect of the electroactive material disclosed herein, preferably about 90 atom% or more of A is Li, and even more preferably A is substantially Li.

Another preferred aspect disclosed herein is a composition in which x = y = 1.5 in the aforementioned general formula (e.g., Li₃Fe₂(PO₄)₃), i.e., a composition equivalent to Nasicon type.

Because this type of electroactive material exhibits charge/discharge characteristics that are identical to a crystalline material, it is ideal as an electroactive material of a secondary battery (preferably, a secondary battery comprising a non-aqueous electrolyte). The electroactive material can also be employed as an anode active material or a cathode active material by selecting other battery constituent materials (particularly the electroactive materials that form the other electrode). It is normally preferable to employ the electroactive material according to the present invention as a cathode active material.

According to the present invention, a cathode active material for a non-aqueous electrolyte secondary battery is provided whose primary component is the above described electroactive material.

Furthermore, according to claim 3 of the present invention, a method of manufacturing this type of electroactive material is provided.

Another method of manufacturing an electroactive material disclosed herein includes a process of rapidly cooling and solidifying a mixture from the melted state, the mixture containing a compound that includes A in the aforementioned general formula (the source of A is, for example, a salt of A), a compound that includes M in the general formula (the source of M is, for example, an oxide of M), and a source of P (a phosphorous compound). Here, A is one or two or more elements selected from the alkali metals. In addition, M is one or two or more metal elements selected from the transition metal elements (e.g., Fe, V, Ti). This method can be preferably applied to a metal phosphate complex in which A is primarily Li, and M is primarily Fe.

One preferred aspect of this method is that a mixture is rapidly cooled and solidified from the melted state, the mixture containing, when the aforementioned A is Li, an oxide whose primary constituent metal element is the aforementioned M (e.g., an iron oxide such as FeO, Fe₂O₃, etc.), the aforementioned source of P (e.g., a phosphorous compound, an ammonium phosphorous salt, etc.), and a lithium compound. Lithium compounds that can be employed in the mixture include, for example, one or two or more compounds selected from lithium compounds such as LiOH, Li₂CO₃, and the like. By employing this type of lithium compound, an electroactive material will be obtained that is equivalent to a state in which the lithium has been charged in advance. Due to this, a reduction in the irreversible capacity can be provided. In addition, by selecting a lithium compound that functions as a flux (e.g., Li₂CO₃), the melting point of the aforementioned mixture can be reduced. According to the present aspect, at least one effect from amongst these can be obtained. In addition, when the aforementioned A is Na, the same effects can be achieved by employing a sodium compound instead of the aforementioned lithium compound.

Any of the electroactive materials described above can be suitably employed as the constituent material of a secondary battery (typically a lithium ion secondary battery). This type of secondary battery comprises a cathode having any of the electroactive materials described above. In addition, the non-aqueous electrolyte secondary battery comprises an anode having a material that charges and discharges alkali metal ions (preferably lithium ions). Furthermore, this secondary battery can comprise a non-aqueous electrolyte material or a solid electrolyte material. This type of secondary battery can attain good battery characteristics, because it comprises an electroactive material having improved charge/discharge characteristics.

### BRIEF DESCRIPTION OF THE DRAWINGS

Figure 1 is a graph showing the X-ray profile of a sample produced in Experimental Example 1.
Figure 2 is an oblique partial cross sectional view showing a coin cell produced in Experimental Example 3.
Figure 3 is a graph showing the charge/discharge profiles of samples produced in Experimental Examples 1 and 2.
Figure 4 is a graph showing the temperature dependent characteristics of the charge/discharge profiles of the sample produced in Experimental Example 1.
Figure 5 is a graph showing the cycle characteristics of the sample produced in Experimental Example 1.
Figure 6 is a graph showing the cycle characteristics of a sample produced in Experimental Example 12.

### BEST MODE FOR CARRYING OUT THE INVENTION

A preferred embodiment of the present invention will be described below in detail. Note that technological matters other than those specifically referred to in the present specification that are essential to the performance of the present invention can be understood as design particulars to one of ordinary skill in the art based upon the prior art in this field. The present invention can be performed based upon the technological details disclosed in the present specification and the common technical knowledge in this field.

The electroactive material according to the present invention is primarily composed of an substantially amorphous transition metal phosphate complex (typically a lithium iron phosphate complex). Preferably, the metal complex is amorphous to the extent that one or two or more of the following conditions are satisfied:
(1) Average crystal size is approximately 1000 angstroms or less (more preferably approximately 100 angstroms or less, even more preferably approximately 50 angstroms or less);
(2) Density of the metal complex is greater than the density (theoretical value) when completely crystalline by approximately 3% or more (more preferably approximately 5% or more); and
(3) No peaks observed in an X-ray diffraction pattern that indicates a crystalline structure.

In other words, a typical example of the electroactive material disclosed herein is an electroactive material whose primary component is a lithium iron phosphate complex that satisfies one or two or more of the aforementioned conditions (1) to (3). For example, a metal complex that satisfies at least the aforementioned condition (3) is preferred. One preferred example of the electroactive material disclosed herein is an electroactive material whose primary component is a transition metal phosphate complex that is amorphous to the extent that at least one or two or more of the aforementioned conditions (1) to (3) are satisfied (in particular, a transition metal phosphate complex that satisfies at least the aforementioned condition (3)), e.g., an electroactive material that is substantially formed from this amorphous material. Note that an X-ray diffraction device which can be purchased from Rigaku Corporation (model number "Rigaku RINT 2100HLR/PC") and the like can be employed to obtain the aforementioned X-ray diffraction patterns. The application effect of the present invention will tend to be more fully expressed by employing a metal complex that is even more amorphous (crystallinity is low).

The electroactive material can contain an alkali metal component (typically a lithium component) that is mostly olivine or Nasicon in composition (in other words, a percentage that is greater than the theoretical composition of olivine type or Nasicon type). An electroactive material that contains an excessive amount of alkali metal component as described above can also be included in the concept of "an electroactive material whose primary component is an amorphous metal complex represented by the general formula AₓM(PO₄)_{y}". The aforementioned alkali metal can, for example, be included as Li₂CO₃. Thus, an electroactive material that contains an excessive amount of an alkali metal component compared to the theoretical quantity of the corresponding crystalline composition can have an irreversible capacity that is further reduced. Without being particularly limited hereto, the excess ratio of the alkali metal to 1 mole of the olivine or Nasicon type compositions (in other words, with the content of the alkali metal component per 1 mole of an olivine type or Nasicon type of crystalline composition as a reference, the excess portion with respect to that content) can be in a range of, for example, 2 moles or less (typically 0.05 to 2 moles), or can be in a range of 1 mole or less (typically 0.1 to 1 mole), as the molar ratio of the alkali metal atom conversion. The electroactive material according to the present invention is ideal for this type of lithium component to be included therein in an amount that is in excess of each crystalline composition, because the structure thereof is amorphous.

In addition, one method of amorphizing the metal complex is a method in which the aforementioned metal complex is rapidly cooled and solidified from the melted state. For example, the metal complex in the melted state will be placed in a low temperature medium (ice water or the like), and rapidly cooled and solidified. In addition, the so-called single roll quenching method (i.e., a method of rapidly cooling a melt by means of the single roll method), the atomization method, and more simply, the melt quench press (i.e., a method of press quenching a melt) may also be employed. This type of amorphizing method can be repeatedly performed two or more times in accordance with need. When performing one of these methods in order to obtain an amorphous metal complex containing bivalent Fe, it is more preferable to perform the same in an inert or reducing atmosphere.

The electroactive material according to the present invention can function as an electroactive material of a secondary battery by means of the insertion and extraction of various types of cations. The cations that are inserted and extracted include alkali metal ions such as lithium ions, sodium ions, potassium ions, cesium ions, and the like, alkaline earth metal ions such as calcium ions, barium ions, and the like, magnesium ions, aluminum ions, silver ions, zinc ions, ammonium ions such as tetrabutylammonium ions, tetraethylammonium ions, tetramethylammonium ions, triethylmethylammonium ions, triethylammonium ions, and the like, imidazolium ions such as imidazolium ions, ethylmethlimidazolium ions, and the like, pyridinium ions, oxygen ions, tetraethylphosphonium ions, tetramethylphosphonium ions, tetraphenylphosphonium ions, triphenylsulphonium ions, triethylsulphonium ions, and the like. Preferred from amongst these are alkali metal ions, and lithium ions are particularly preferred.

When the electroactive material is employed in a cathode of a battery, metals such as lithium (Li), sodium (Na), magnesium (Mg), aluminum (Al), and the like or alloys of the same, or carbonaceous materials and the like that can charge/discharge cations, can be employed as the active material of the anode (the opposite electrode).

An electrode having the aforementioned electroactive material according to the present invention can be ideally employed as an electrode of a secondary battery having various shapes, such as coin type, cylinder type, square type, and the like. For example, the electroactive material can be compression molded to form an electrode in the shape of a plate and the like. In addition, by adhering the aforementioned electroactive material to a collector composed of a conductive material such as metal or the like, a plate or sheet shaped electrode can be formed. This type of electrode can, in addition to the electroactive material according to the present invention, also contain the same one or two or more types of materials in an electrode having a standard electroactive material, in accordance with need. Representative examples of this type of material includes conductive material and a binding agent. Carbonaceous materials such as acetylene black and the like can be employed as a conductive material. In addition, organic polymers such as polyfluorovinylidene (PVDF), polytetrafluoroethylene (PTFE), polyfluorovinylidene-hexafluoropropylene copolymer (PVDF-HFP), and the like can be employed as a binding agent.

As the non-aqueous electrolyte employed in the secondary battery, an electrolyte containing a non-aqueous solvent, and a compound having cations that can be inserted and extracted from an electroactive material (supporting electrolyte) can be used.

An aprotonic solvent having carbonate, ester, ether, nitryl, sulfone, lactone, and the like can be employed as the non-aqueous solvent that forms the non-aqueous electrolyte, but is not limited thereto. For example, propylene carbonate, ethylene carbonate, diethyl carbonate, dimethyl carbonate, ethyl methyl carbonate, 1, 2-dimethoxyethane, 1, 2-diethoxyethane, acetonitrile, propionitrile, tetrahydrofuran, 2-methyltetrahydrofuran, dioxane, 1, 3-dioxane, nitromethane, N, N-dimethylformamide, dimethylsulfoxide, sulfolane, ã-butyrolactone, and the like. Only one type may be selected from these non-aqueous solvents, or a mixture of two or more types may be employed.

In addition, as the supporting electrolyte that forms the non-aqueous electrolyte, one type or two or more types can be employed that are selected from compounds containing cations that can be inserted into and extracted from the electroactive material, e.g., lithium compounds (lithium salts) such as LiPF₆, LiBF₄, LiN(CF₃SO₂)₂, LiCF₃SO₃, LiC₄F₉SO₃, LiC(CF₃SO₂)₃ LiClO₄ and the like when a lithium ion secondary battery is used.

The present invention will be described below in further detail by means of examples, however the present invention is in no way limited to these examples.

### <Experimental Example 1: Production of an amorphous sample of a bivalent iron olivine composition by means of the simple roll method and confirmation of the amorphization thereof>

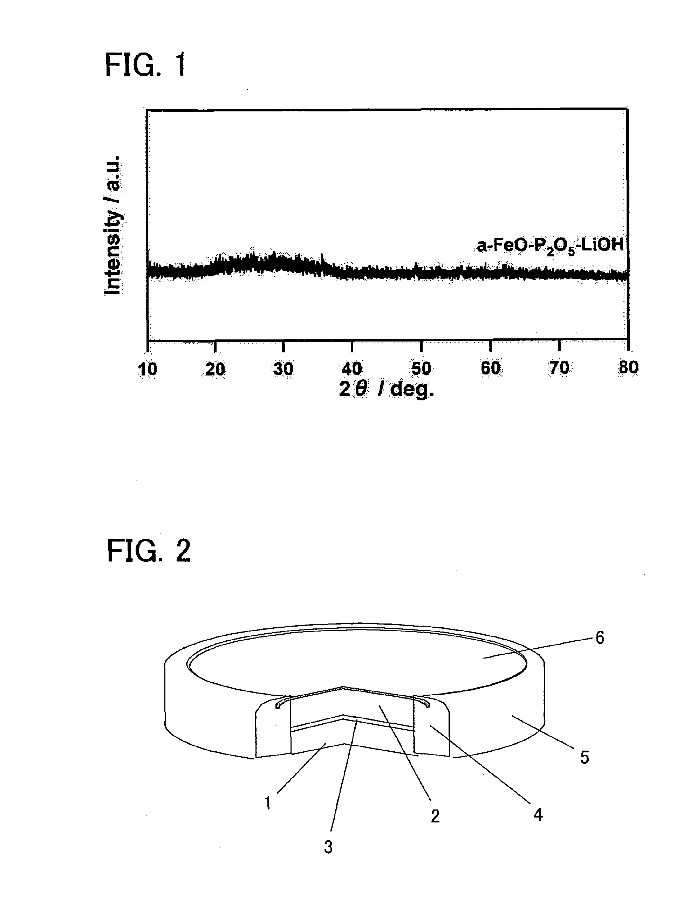

In order to attain an amorphous material having a bivalent iron olivine composition, a bivalent iron oxide was employed as a starting material (Fe source) to produce an amorphous sample. More specifically, FeO, P₂O₅, and LiOH• H₂O were mixed together at a molar ratio of 1:0.5:1. This mixture was melted for 5 minutes at 1500°C in the presence of an Ar atmosphere in order to maintain the Fe in a bivalent state, and a single roll quenching device was employed to rapidly cool the same with a 2000 rpm single roll. The resulting product was milled by a standard method to obtain a sample (average particle diameter of approximately 16.8 µm), and powder X-ray diffraction (XRD) measurements were performed. An X-ray diffraction device (model number "Rigaku RINT 2100HLR/PC") which can be obtained from Rigaku Corporation was employed for the measurements. The results are shown in Figure 1. As shown in the figure, only the X-ray diffuse scattering characteristics of an amorphous material were observed, and thus this sample was confirmed to be amorphous.

### <Experimental Example 2: Production of an amorphous sample of a bivalent Fe olivine composition by means of the melt quench method and confirmation of the amorphization thereof>

In order to attain an amorphous material having a bivalent iron olivine composition, a bivalent iron oxide was employed as a starting material (Fe source) to produce an amorphous sample. More specifically, FeO, P₂O₅, and LiOH •H₂O were mixed together at a molar ratio of 1:0.5:1. This mixture was melted for 5 minutes in an atmosphere oven in the presence of an Ar atmosphere in order to maintain the Fe in the bivalent state, and was then promptly removed and quench pressed. The resulting product was milled by a standard method to obtain a sample (average particle diameter of approximately 16.8 µm), and powder X-ray diffraction (XRD) measurements were performed. An X-ray diffraction device (model number "Rigaku RINT 2100HLR/PC") which can be obtained from Rigaku Corporation was employed for the measurements. Although not shown in the figures, like the measurement results of Experimental Example 1 (see Figure 1), only the X-ray diffuse scattering characteristics of an amorphous material were observed. From the aforementioned results, it was clear than an identical amorphous material will be obtained regardless of the quench method used.

### <Experimental Example 3: Production of an amorphous sample of a trivalent Fe Nasicon composition by means of the simple roll method or melt quench method and confirmation of the amorphization thereof>

In order to attain an amorphous material having a trivalent iron Nasicon composition, a tiivalent iron oxide was employed as a starting material (Fe source) to produce an amorphous sample. More specifically, Fe₂O₃, P₂O₅, and LiOH • H₂O were mixed together at a molar ratio of 1:1.5:3. This mixture was melted for 5 minutes at 1500°C in the presence of atmospheric air, and a single roll quenching device was employed to rapidly cool the same with a 2000 rpm single roll. Alternatively, the mixture was melted for 5 minutes in an electric oven in the presence of atmospheric air, and then quench pressed. Each of the resulting products obtained by these rapid cooling methods were milled by a standard method to obtain a sample (average particle diameter of approximately 16.8 µm), and powder X-ray diffraction (XRD) measurements were performed. An X-ray diffraction device (model number "Rigaku RINT 2100HLR/PC") which can be obtained from Rigaku Corporation was employed for the measurements. Although not shown in the figures, like the measurement results of Experimental Example 1 (see Figure 1), only the X-ray diffuse scattering characteristics of an amorphous material were observed in all of the resulting products. From these results, it was clear than an identical amorphous material will be obtained regardless of the rapid cooling method used.

### <Experimental Example 4: Production and identification of a crystalline sample of an Fe olivine composition>

FeC₂O₄ • 2H₂O, LiOH • H₂O, and (NH₄)₂HPO₄ were mixed together at a stoichiometric ratio of 1:1:1, and this mixture was calcinated at 350°C for 5 hours in an argon flow. The calcinated material was milled, remixed, and synthesized for one day at 650°C to obtain a Pnma orthorhombic crystalline olivine type LiFePO₄. A crystalline sample of the Fe olivine composition according to experimental example 4 does not form a part of the invention.

### <Experimental Example 5: Confirmation of the composition of an amorphous sample of an Fe olivine composition>

An ICP composition analysis was performed on the amorphous sample obtained in Experimental Example 1 and the crystalline olivine type LiFePO₄ obtained in Experimental Example 4. As shown in Table 1, the results confirmed that the amorphous material obtained in Experimental Example 1 has a composition that is identical to an olivine crystalline material.

**Table 1**

| Amorphous FeO-P₂O₅-LiOH | | | |
|---|---|---|---|
| | Li | Fe | P |
| Prepared ratios | 1.0 | 1.0 | 1.0 |
| Measured ratios | 1.2 ±0.0008 | 1.0 ±0.04 | 0.73 ±0.008 |

| Crystal LiFePO₄ | | | |
|---|---|---|---|
| | Li | Fe | P |
| Measured ratios | 1.2 ±0.004 | 1.0 ±0.02 | 0.70 ±0.02 |

### <Experimental Example 6: Production of measurement cells>

The sample obtained by means of Experimental Example 1 (an amorphous LiFePO₄ composition) and the sample obtained by means of Experimental Example 4 (crystalline olivine type LiFePO₄) were respectively employed to produce measurement cells.

In other words, approximately 0.25 g of sample as the electroactive material, milled in advance until it could not be felt on the fingertips, was mixed together with approximately 0.089 g of acetylene black (AB) as a conductive material and approximately 0.018 g of polytetrafluoroethylene (PTFE) as a binding agent (a mass ratio of approximately 70:25:15). This mixture was compression molded into a plate shape having a diameter of 1.0 cm and a thickness of 0.5 mm to produce a test electrode. A lithium foil having a diameter of 1.5 mm and a thickness of 0.15 mm was employed as the opposite electrode. A porous polyethylene sheet having a diameter of 22 mm and a thickness of 0.02 mm was employed as a separator. In addition, a non-aqueous electrolyte was used in which LiPF₆ was dissolved at a concentration of approximately 1 mole/liter in a mixed solvent of ethylene carbonate (EC) and diethyl carbonate (DEC) having a specific volume of 1:1. These elements were combined in a stainless steel vessel, and the coin type cell shown in Figure 2 having a thickness of 2 mm and a diameter of 32 mm (2032 type) was constructed. In Figure 2, reference number 1 indicates the positive electrode (test electrode), reference number 2 indicates the negative electrode (opposite electrode), reference number 3 indicates the separator and electrolyte material (non-aqueous electrolyte), reference number 4 indicates a gasket, reference number 5 indicates a positive electrode container, and reference number 6 indicates a negative electrode cover.

### <Experimental Example 7: Measurement of batteries that employed the active material obtained by means of Experimental Examples 1 and 4>

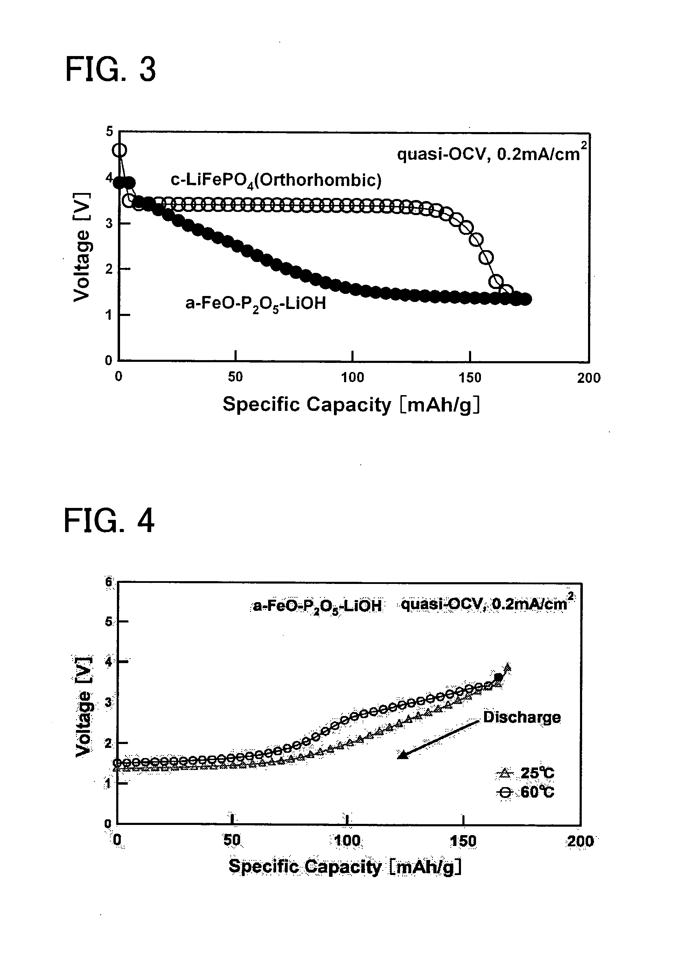

Measurement cells produced by respectively employing the sample obtained by means of Experimental Example 1 (an amorphous LiFePO₄ composition) and the sample obtained by means of Experimental Example 4 (crystalline olivine type LiFePO₄) were discharged for approximately 12 hours after production, and a constant current charge/discharge test was then performed as described below. In other words, 1 mole of Li was extracted at a current density of 0.2 mA/cm² (equivalent to charging), and then the same quantity of Li was inserted at the same current density (equivalent to discharging). Then, a QOCV (quasi-open circuit voltage) measurement was performed at 25°C, in which the charge and discharge of 0.025 mole of the Li was performed, and then halted for the same amount of time. The results are shown in Figure 3. In Figure 3, the data shown by the black circles indicates the measurement results for the cell that was produced with the amorphous sample obtained by means of Experimental Example 1, and the data shown by the white circles indicates the measurement results for the cell that was produced with the crystalline sample obtained by means of Experimental Example 4. As shown in the figure, although the cell that employed the sample obtained by means of Experimental Example 1 had worse charge/discharge voltage flatness than the crystalline sample (Experimental Example 4), the 1.25V terminal capacity was achieved at 170 mAh/g, which is equivalent to the theoretical capacity of 1 Li.

### <Experimental Example 8: Measurement of batteries that employed the active material obtained by means of Experimental Example 1>

A QOCV (quasi-open circuit voltage) measurement identical to Experimental Example 7 was performed at 25°C and 60°C on the measurement cell produced with the sample obtained by means of Experimental Example 1. The measurement results of the charge/discharge voltages here are shown in Figure 4. In the figure, the plots shown by the triangles indicate the measurement results at 25°C, and the plots shown by the white circles indicate the measurement results at 60°C. As shown in the figures, at all measurement parameters the discharge voltage shows a monotonically decreasing profile that is homogeneously reactive from near 4V, and the capacity for either is approximately 170 mAh/g at a terminal voltage of 1.25V. In the 60°C discharge profile, compared to the 25°C discharge voltage profile, a reduction in the charge voltage (not shown in the figures) and an increase in the discharge voltage was observed.

### <Experimental Example 9: Cycle measurement of batteries that employed the active material obtained by means of Experimental Example 1>

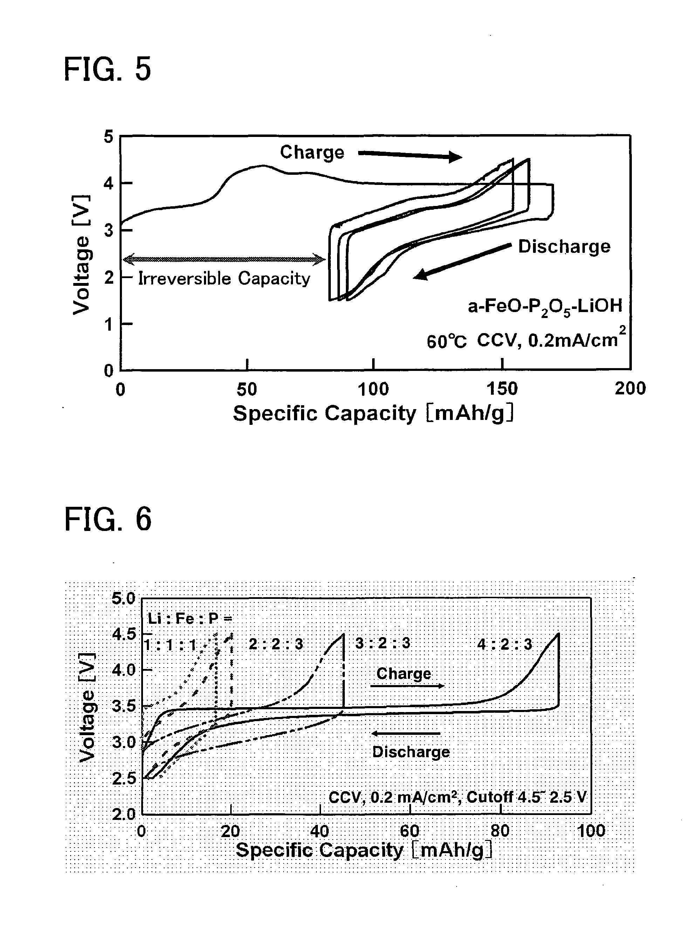

A cycle test was performed at 60°C on the measurement cell produced with the sample obtained by means of the Experimental Example 1, with the current density at 0.2 mA/cm², and a voltage control parameter of 4.5 to 1.5V battery voltage. The results are shown in Figure 5. Although an irreversible capacity of approximately 80 mAh/g was observed, a stable irreversible capacity of approximately 90 mAh/g was obtained after two cycles. In other words, according to the aforementioned cells, the aforementioned irreversible capacity stabilized after two cycles.

### <Experimental Example 10: Production and battery characteristics of an amorphous sample whose composition includes a Li quantity greater than Experimental Example 1>

FeO, P₂O₅, and LiOH • H₂O were mixed at a molar ratio of 1:0.5:1+x (e.g., the molar ratio shown in Table 2), and amorphous samples (samples 1 to 6) were obtained by the same method as Experimental Example 1. The sample in which the aforementioned molar ratio is 1:0.5:1 has the same composition as in Experimental Example 1. In addition, the sample in which the aforementioned molar ratio is 1:0.5:1.1 (e.g., x = 0.1 in the aforementioned molar ratio), the sample in which the molar ratio is 1:0.5:1.3 (e.g., x = 0.3), and the sample in which the molar ratio is 1:0.5:1.5 (e.g., x = 0.5), have a composition that contains more alkali metal (here, lithium) than the theoretical composition of olivine type. More specifically, the excess amount of lithium with respect to 1 mole of the olivine composition is respectively 0.1 mole, 0.3 mole, and 0.5 mole. An evaluation of the battery characteristics was performed on these amorphous samples in the same way as in Experimental Example 9. Here, the ratio of irreversible capacity to reversible capacity was measured with regard to each measured value of x in the samples. The results are shown in Table 2. It is clear that the irreversible capacity ratio was reduced with x in a range of 0.1 to 0.5. Compared to a crystalline composition limited to 1:0.5:1, the degree of freedom of a composition will increase by amorphization. Thus, it is understood that the electrode characteristics will improve by increasing the Li ratio to be higher than the same composition (i.e., the crystalline composition).

**Table 2**

| FeO:P₂O₅:LiOH • H₂O | Irreversible capacity / Reversible capacity |
|---|---|
| 1 : 0.5 : 0 | 2.6 |
| 1 : 0.5 : 0.5 | 1.4 |
| 1 : 0.5 : 1 | 0.88 |
| 1 : 0.5 : 1.1 | 0.7 |
| 1 : 0.5 : 1.3 | 0.55 |
| 1 : 0.5 : 1.5 | 0.7 |

### <Experimental Example 11: Production and battery characteristics of an amorphous sample of a solid solution composition in which the quantity of Li and P were continuously varied more than in Experimental Example 1>

FeO or Fe₂O₃, P₂O₅, and LiOH • H₂O were mixed together as starting materials at a ratio in which the molar ratio of the Fe:P:Li = 1:y:x and are the values shown in Table 3. Then, with the same method as Experimental Examples 1 or 2 when the amorphous material is bivalent iron, and with the same method as Experimental Example 3 when the amorphous material is trivalent iron, an amorphous sample of each composition was obtained. An evaluation of the battery characteristics was performed on these samples in the same way as in Experimental Example 9. Here, the reversible capacity was measured with regard to each measured value of x and y in the samples. The results are shown in Figure 3. The most favorable terminal reversible capacity of 1.5V was obtained when the FeO:P₂O₅:LiOH • H₂O that provides a composition equivalent to x = y = 1 in the general formula LiₓM(PO₄)_{y} = 1:0.5:1. In addition, with a 0.5V terminal reversible capacity having low potential and initial capacity, the most favorable effects were obtained with a composition in which x = 0 and y = 0.3.

**Table 3**

| LiₓM(PO₄)_{y} | 1.5V | 0.5V |
|---|---|---|
| | terminal reversible capacity [mAh/g] | terminal reversible capacity [mAh/g] |
| x=0, y=3 | 45 | 170 |
| x=0, y=2 | 20 | 150 |
| x=0, y=1.5 | 72 | 330 |
| x=0, y=1 | 45 | 430 |
| x=0, y=0.5 | - | 390 |
| x=0, y=0.3 | 80 | 660 |
| x=1, y=1 | 91 | 430 |
| x=1.5, y=1.5 | 81 | 200 |
| x=1, y=2 | 55 | 150 |

### <Experimental Example 12: Production and battery characteristics of an amorphous sample of a solid solution composition in which the quantity of Li and P were continuously varied more than in Experimental Example 1>

FeO or Fe₂O₃, P₂O₅, and LiOH • H₂O were mixed together as starting materials at a ratio in which the molar ratio of the Fe:P:Li = 1:y:x and are the values shown in Table 4. Then, with the same method as Experimental Examples 1 or 2 when the amorphous material is bivalent iron, and with the same method as Experimental Example 3 when the amorphous material is trivalent iron, an amorphous sample of each composition was obtained. A cycle test was performed on these samples that is identical to Experimental Example 9, except that the voltage control parameters were 4.5 to 2.5V. The reversible capacities of the samples for each measured value of x and y are shown in Table 4. In addition, the results of cycle tests on the samples in which x = 1, y = 1 (Fe:P:Li = 1:1:1), x = 1, y = 1.5 (Fe:P:Li = 2:3:2), x = 1.5, y = 1.5 (Fe:P:Li = 2:3:3), and x = 2, y = 1.5 (Fe:P:Li = 2:3:4) are shown in Figure 6. As is clear from Table 4 and Figure 6, the most favorable 2.5V terminal reversible capacity was obtained with a prepared compound equivalent to x = 2, y = 1.5 in the general formula LiₓM(PO₄)_{y}.

**Table 4**

| LiₓM(PO₄)_{y} | 2.5V |
|---|---|
| | terminal reversible capacity [mAh/g] |
| X=1, y=1 | 16 |
| X=1, y=1.5 | 20 |
| X=1.25, y=1.5 | 33 |
| X=1.5, y=1.5 | 45 |
| X=1.75, y=1.5 | 68 |
| X=2, y=1.5 | 92 |

Specific examples of the present invention were described in detail above. However, these are simply examples, and do not limit the scope of the patent claims. The technology disclosed in the scope of the patent claims includes various modifications and changes of the specific examples illustrated above.

In addition, the technological components described in the present specification or figures exhibit technological utility either independently or in various combinations, and are not limited by the combinations disclosed in the claims at the time of application. Furthermore, the technology illustrated in the present specification or the figures simultaneously achieves a plurality of objects, and has technological utility by achieving one object from amongst these.

## Claims

1. An electroactive material whose primary component is an substantially amorphous transition metal phosphate complex represented by the general formula AXM(P04)y (1 < x < 2, 0 < y < 2, A is alkali metal, and M is one or two or more metal elements selected from transition metals) and
wherein 75 atom% or more of M in said general formula is iron and
wherein 75 atom% or more of A in said general formula is lithium and
contains an excessive amount of A compared to the theoretical quantity of the olivine or Nasicon crystalline composition and
wherein said substantially amorphous transition metal phosphate complex satisfies one or two or more of the following conditions:
(1) average crystal size is 1000 angstroms or less;
(2) density of the metal complex is greater than the theoretical value of the density when completely crystalline by 3% or more; and
(3) no peaks observed in an X-ray diffraction pattern that indicates a crystalline structure.

2. A cathode for a non-aqueous electrolyte secondary battery employing the electroactive material of claim 1.

3. A method of manufacturing an electroactive material according to claim 1 comprising:
a step of preparing a crystal of transition metal phosphate complex represented by the formula AXM(P04)y (1 < x < 2, 0 < y < 2), A is alkali metal and 75 atom% or more of A is Lithium and contains an excessive amount of A compared to the theoretical quantity of the olivine or Nasicon crystalline composition, M is one or two or more metal elements selected from transition metals and 75 atom% or more of M is iron), and
a step of amorphizing the crystal of transition metal phosphate complex.

4. A method of manufacturing an electroactive material according to claim 3, comprising:
a step of preparing a mixture containing a salt of A in said general formula, an oxide of M in said general formula, and a phosphorous compound; and
a step of rapidly cooling and solidifying the mixture from a melted state.

5. The method disclosed in claim 4, wherein the ratio of A, M, PO₄ of the mixture differs from the ratio in the general formula AₓM(PO₄)_{y} (1 < x ≤ 2, 0 < y ≤ 2, A is alkali metal and 75 atom% or more of A is Lithium and contains an excessive amount of A compared to the theoretical quantity of the olivine or Nasicon crystalline composition, and M is one or two or more metal elements selected from transition metals and 75 atom% or more of M is iron) is varied, and the mixture composed of a glassified composition is employed.

6. A non-aqueous electrolyte secondary battery, comprising:
a cathode according to claim 2;
an anode having a material that absorbs/discharges alkali metal ions; and
a non-aqueous electrolyte or a solid electrolyte.

7. The non-aqueous electrolyte secondary battery disclosed in claim 6, wherein said alkali metal ions are lithium ions.

## Patentansprüche

1. Elektroaktives Material, dessen Primärkomponente ein im Wesentlichen amorpher Übergangsmetallphosphatkomplex ist, der durch die allgemeine Formel AₓM(PO₄)_{y} (1<x<2,0<y<2, A ist ein Alkalimetall und M ist/sind eines oder zwei oder mehrere Metallelemente, die aus den Übergangsmetallen ausgewählt werden) dargestellt wird, und
wobei M in der allgemeinen Formel zu mindestens 75 at-% aus Eisen besteht, und wobei A in der allgemeinen Formel zu mindestens 75 at-% aus Lithium besteht, und
wobei das elektroaktive Material im Vergleich zu der theoretischen Menge in einer kristallinen Zusammensetzung von Olivin oder Nasicon eine übermäßige Menge an A enthält, und
wobei der im Wesentlichen amorphe Übergangsmetallphosphatkomplex eine oder zwei oder mehrere der folgenden Bedingungen erfüllt:
(1) Die durchschnittliche Kristallgröße beträgt 1000 Ångström oder weniger;
(2) Die Dichte des Metallkomplexes ist größer als der theoretische Wert der Dichte, wenn er zu mindestens 3% vollständig kristallin ist; und
(3) es können keine Peaks die in einem Röntgen-Beugungsbild auf eine kristalline Struktur hinweisen erfasst werden.

2. Kathode für eine Sekundärbatterie mit nicht-wässrigem Elektrolyt, die das elektroaktive Material nach Anspruch 1 verwendet.

3. Verfahren zum Herstellen eines elektroaktiven Materials nach Anspruch 1, aufweisend:
einen Schritt des Fertigens eines Kristalls aus dem durch die Formel AₓM(PO₄)_{y} (1<x<2,0<y<2) dargestellten Übergangsmetallphosphatkomplex, wobei A ein Alkalimetall ist und zu mindestens 75 at-% aus Lithium besteht und im Vergleich zu der theoretischen Menge in einer kristallinen Zusammensetzung von Olivin oder Nasicon eine übermäßige Menge an A enthält, und wobei M eines oder zwei oder mehrere Metallelemente ist/sind, die aus den Übergangsmetallen ausgewählt werden und wobei M zu mindestens 75 at-% aus Eisen besteht, und
einen Schritt des Amorphisierens des Kristalls aus dem Übergangsmetallphosphatkomplex.

4. Verfahren zum Herstellen eines elektroaktiven Materials nach Anspruch 3, aufweisend:
einen Schritt des Fertigens einer Mischung, die ein Salz aus A in der allgemeinen Formel, ein Oxid aus M in der allgemeinen Formel, und eine Phosphorverbindung enthält; und
einen Schritt des schnellen Abkühlens und Verfestigens der Mischung aus einem geschmolzenen Zustand heraus.

5. Verfahren nach Anspruch 4, wobei sich das Verhältnis von A, M, PO₄ der Mischung von dem Verhältnis in der allgemeinen Formel AₓM(PO₄)_{y} (1<x≤2,0<y≤2, wobei A ein Alkalimetall ist und zu mindestens 75 at-% aus Lithium besteht und im Vergleich zu der theoretischen Menge in einer kristallinen Zusammensetzung von Olivin oder Nasicon eine übermäßige Menge an A enthält, und wobei M eines oder zwei oder mehrere Metallelemente ist/sind, die aus den Übergangsmetallen ausgewählt werden und wobei M zu mindestens 75 at-% aus Eisen besteht) unterscheidet, und wobei die aus einer glasifizierten Zusammensetzung bestehende Mischung verwendet wird.

6. Sekundärbatterie mit nicht-wässrigem Elektrolyt, aufweisend:
eine Kathode nach Anspruch 2;
eine Anode, die ein Material aufweist, das Alkalimetallionen absorbiert oder absondert; und
einen nicht-wässrigen Elektrolyten oder einen Feststoffelektrolyten.

7. Sekundärbatterie mit nicht-wässrigem Elektrolyt nach Anspruch 6, wobei die Alkalimetallionen Lithiumionen sind.

## Revendications

1. Matière électroactive dont le constituant principal est un complexe de phosphate de métal de transition pratiquement amorphe représenté par la formule générale AₓM(PO₄)_{y} (1 < x < 2, 0 < y < 2, A est un métal alcalin, et M est un ou deux ou plusieurs éléments de métaux choisis parmi des métaux de transition) et
dans laquelle 75 % en atome ou plus de M dans ladite formule générale sont du fer et
dans laquelle 75 % en atome ou plus de A dans ladite formule générale sont du lithium et
contient une quantité en excès de A en comparaison avec la quantité théorique de l'olivine ou de la composition cristalline Nasicon et
dans laquelle ledit complexe de phosphate de métal de transition pratiquement amorphe satisfait une ou deux ou plusieurs des conditions suivantes :
(1) la taille moyenne de cristal est de 1 000 angströms ou inférieure ;
(2) la densité du complexe de métal est supérieure à la valeur théorique de la densité lorsqu'il est complètement cristallin de 3 % ou plus ; et
(3) aucun pic n'est observé dans un motif de diffraction aux rayons X qui indique une structure cristalline.

2. Cathode pour un accumulateur secondaire à électrolyte non aqueux utilisant la matière électroactive selon la revendication 1.

3. Procédé de fabrication d'une matière électroactive selon la revendication 1 comprenant :
une étape de préparation d'un cristal de complexe de phosphate de métal de transition représenté par la formule générale AₓM(PO₄)_{y} (1 < x < 2, 0 < y < 2), A est un métal alcalin et 75 % en atome ou plus de A sont du lithium et contient une quantité en excès de A en comparaison avec la quantité théorique de l'olivine ou de la composition cristalline Nasicon, M est un ou deux ou plusieurs éléments de métaux choisis parmi des métaux de transition et 75 % en atome ou plus de M sont du fer), et
une étape consistant à rendre le cristal de complexe de phosphate de métal de transition amorphe.

4. Procédé de fabrication d'une matière électroactive selon la revendication 3, comprenant :
une étape de préparation d'un mélange contenant un sel de A dans ladite formule générale, un oxyde de M dans ladite formule générale, et un composé de phosphore ; et
une étape de refroidissement rapide et de solidification du mélange à partir d'un état fondu.

5. Procédé selon la revendication 4, dans lequel on fait varier le rapport de A, M, PO₄ du mélange différent du rapport dans la formule générale AₓM(PO₄)_{y} (1 < x ≤ 2, 0 < y ≤ 2, A est un métal alcalin et 75 % en atome ou plus de A sont du lithium et contient une quantité en excès de A en comparaison avec la quantité théorique de l'olivine ou de la composition cristalline Nasicon, et M est un ou deux ou plusieurs éléments de métaux choisis parmi des métaux de transition et 75 % en atome ou plus de M sont du fer), et on utilise le mélange constitué d'une composition vitrifiée.

6. Accumulateur secondaire à électrolyte non aqueux, comprenant :
une cathode selon la revendication 2;
une anode présentant une matière qui absorbe/décharge des ions de métaux alcalins ; et
un électrolyte non aqueux ou un électrolyte solide.

7. Accumulateur secondaire à électrolyte non aqueux selon la revendication 6, dans lequel lesdits ions de métaux alcalins sont des ions lithium.
